# EUROPEAN PATENT SPECIFICATION

(11) **EP 3 290 589 B1**
(45) Date of publication and mention of the grant of the patent: **13.11.2019**
(21) Application number: 17188064.4
(22) Date of filing: 28.08.2017
(51) Int. Cl.: E01H 1/00

(54) **ARRANGEMENT FOR REMOVING VERGE DEBRIS**
ANORDNUNG ZUM ENTFERNEN VON RANDSCHMUTZ
AGENCEMENT PERMETTANT D'ÉLIMINER DES DÉBRIS DE BORD

(30) Priority: 29.08.2016 FI 20165643
(43) Date of publication of application: 07.03.2018
(73) Proprietor: Vaasan Huolto ja Kierrätys Oy, 65610 Mustasaari (FI)
(72) Inventor: Kullbäck, Leif, 65610 Mustasaari (FI)
(74) Representative: Kolster Oy Ab

(56) References cited:
- WO-A1-2013/077731
- NL-C1- 1 005 524
- US-A- 1 588 745
- US-A- 2 555 948
- US-A- 4 227 280

## Description

### Technical field

The present invention relates to a device for clearing roadside debris mounds according to the ingress to patent claim 1.

A common problem in road maintenance is that material collects into mounds along road verges. Amongst other things, this prevents rain water running off from the road surface. Such roadside debris mounds arise when road drags are used to smooth dirt roads. However, paved roads also suffer the same problem. Here, it is often the repeated mowing of road embankments that gradually results in an accumulation of mouldering biomaterial along road verges. This material also binds sand, other biological matter and rubbish being spread along the roads.

To attend the problem of roadside debris mounds, road verges must be maintained at regular intervals, e.g. annually. Such maintenance is often carried out using a standard bulldozer blade mounted on a work machine (a lorry, a tractor or an articulated wheel loader). However, a bulldozer blade is not the best imaginable tool for this work. One problem is that a bulldozer blade cannot be used to maintain the road verge along guard rails. Quite simply, a bulldozer blade does not fit under guard rails. Another problem is that a bulldozer blade only pushes the material from the road verge onto the adjacent embankment. Here, it builds an ever bigger mound and the same problems result.

To avoid the pushing of material out across the embankment and the forming of a new mound along the embankment, excavators are, to a certain extent, used to clear roadside debris mounds. In these cases, the material is often loaded onto lorries that take part in the task. This work is very time-consuming and, at the same time, the work machines moving along the carriageway present a considerable traffic hazard.

As this type of road maintenance is a common problem, there have even been attempts to develop solutions that could make handling of roadside debris mounds more economical. For example, patent publication US 2008/0298892 shows a solution in which a rotating screw loosens roadside debris mounds and leads the material to a bulldozer blade that spreads it across the embankment. Mechanically, the solution is very cumbersome, requiring lots of adjustment throughout the work without reliably preventing the formation of new mounds along the embankment. A somewhat similar solution is also shown in patent publication US 5,199,195. The described work machine is largely reminiscent of the one just described, but without said bulldozer blade. The problems with the machine are the same as described above. Both these known solutions are also so big that they are not suitable for taking care of maintenance beneath guard rails along roads.

Solutions such as those in publications WO 2013/077731 and US 6,056,067, which employ a cleaning organ rotating around an essentially vertical shaft, have also been developed. In use, these devices require great concentration by the work machine's operator. This is because a cleaning organ that is positioned too low will be damaged. These solutions, just as the solutions above, are also afflicted with an inability to prevent the formation of new mounds along road verges. NL 1 005 524 C1 describes a device with the features of the preamble of claim 1.

### Summary of the invention

Using the present invention, the problems inherent in known solutions can essentially be avoided. The invention can hereby contribute a compact, sufficiently low-profile and easy-to-use device offering great operational reliability.

This purpose is achieved by the invention by giving a roadside debris mound clearing device the characteristics set out in patent claim 1. The subsequent, dependent patent claims set out appropriate, further developments and variants of the invention that further improve its functionality.

The invention is based on the concept that the work tool should be able to solve two central problems. First, the design should embody a profile that is low enough for use under the guard rails along roads. Second, it should also be able to distribute the loosened material in such a way that the formation of new mounds along roadside embankments is avoided.

Using the device described in the present invention has several significant advantages over the prior art. For example, the present invention can easily be dimensioned so that it is easy to manoeuvre under guard rails.

Hitching the device to an excavator or a wheel loader via a quick-release mount gives the operator a good overview of the work area. The device's relatively frugal dimensions also contribute to it being quick and easy to control for working not only areas under guard rails, but also around posts and other obstacles along road verges.

The device's rotor spreads the material loosened from roadside debris mounds evenly across road embankments. Spread can even be regulated by controlling the rotor's rotation sped and, thereby, the rotor's centrifugal force.

The present device's design is rugged having wear parts that are easy to replace as necessary,. This gives an operational reliability that can even be likened to that of the use of a bulldozer blade.

By giving the device various types of quick-release mounts, it can be easily hitched to a range of different work machines.

If, for example, an excavator is being used as the work machine, the present device does not have to be provided with a special operating organ to swing the device into a transport position.

Further advantages and details of the invention are set out more closely in the description below.

### Brief description of the drawings

In the following, the invention is described more closely with references to drawings where:
figure 1 shows the present device viewed directly from the front;
figure 2 shows a device according to figure 1 viewed from the side; and,
figure 3 shows a device according to figure 1 viewed from above with the cover removed.

### Preferred embodiments

The above-mentioned figures are not a to-scale depiction of a device for clearing roadside debris mounds. Their sole purpose is to illustrate the preferred designs' construction solutions and the designs' functions. Here, the individual design elements shown and labelled with a reference number in the figures correspond to the design solutions presented in the description given below, in which said elements are also cited with a reference number.

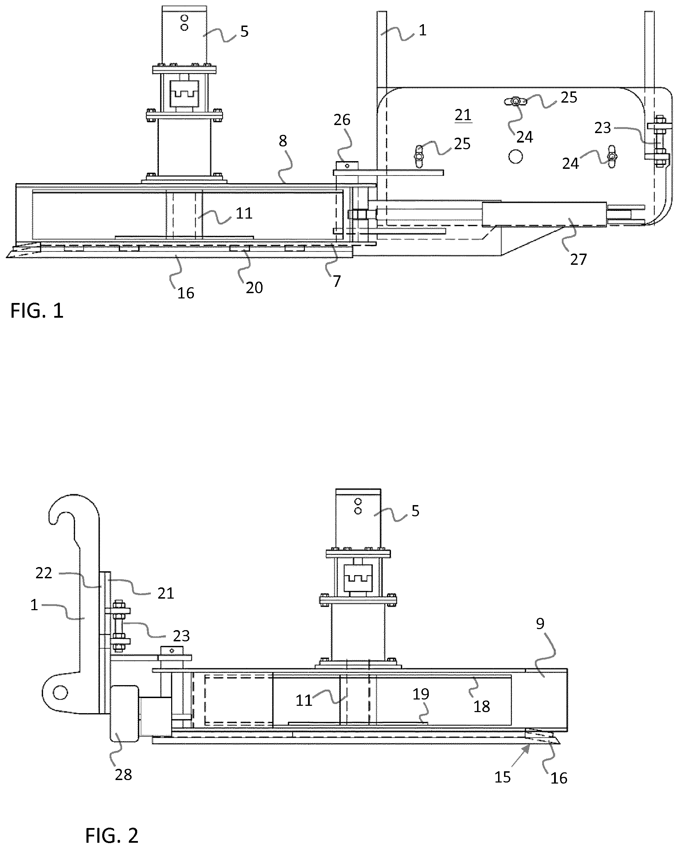

A device according to figures 1 to 3 advantageously includes at least four main elements. Firstly, a so-called quick-release mount 1 of a known type, via which the device can easily be hitched to a known work machine. There are various designs of such quick-release mounts. They can be chosen according to needs.

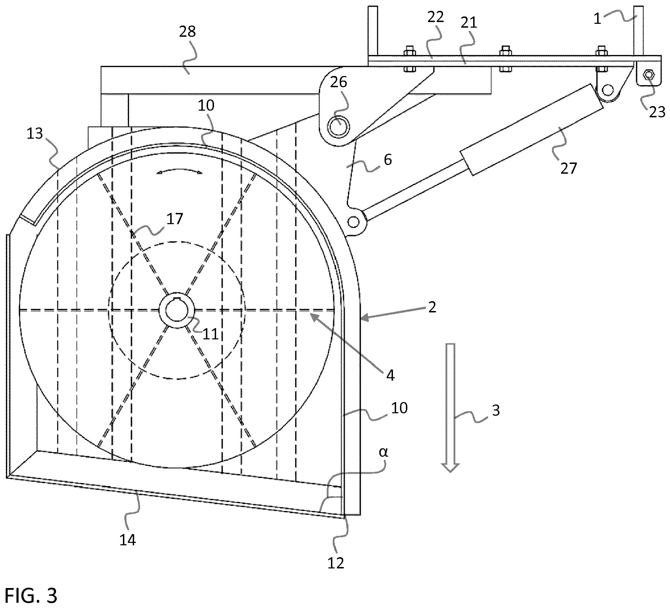

The device further includes a scraper 2 that loosens roadside debris mounds from their substrates. The scraper is arranged so that it can pivot in relation to the quick-release mount and can thus be tilted to suit the carriageway that is being worked. Tilting can be both in the carriageway's direction indicated by reference number 3 in figure 3 and perpendicular to this working direction. Thus, using said quick-release mount, the scraper's front or back edge can be tilted towards the carriageway. The scraper can also be configured for arrangement in a transport position, the work machine then being able to travel in ordinary traffic with no great problems.

The device also includes a transport apparatus 4 for evacuating the material loosened from roadside debris mounds. Finally, the device includes a drive device 5 for operating the transport apparatus.

On studying figures 1 and 2, it can be seen that a body 6 of the scraper 2 is formed as a scoop. This scoop has a bottom plate 7 that is to be positioned next to or on the carriageway. Essentially parallel with the bottom plate, the scoop has a cover 8. The bottom plate and the cover together form a transport space 9 that houses the previously mentioned transport apparatus 4. In the present advantageous design, the scoop further includes one or more contour walls 10 that run from the bottom plate to the cover. Leaving the scoop open between the bottom plate and the cover in the working direction and in a direction towards the adjacent road embankment, these contour walls partially seal the scoop vertically. However, the scoop is closed in a direction that, while the device is in use, is oriented towards both the carriageway's centre and the work machine to which the device is mounted. While the device is in use, said machine is behind the device. The purpose of these contour walls is primarily to join the bottom plate and the cover, thereby, strengthening the scoop structurally. The contour walls also prevent collected material being disadvantageously spread to the device's other design elements. Finally, the contour walls protect the transport apparatus from impacts and other inappropriate influence.

Formed as a rotor, the above-mentioned transport apparatus 4 is arranged in the transport space 9 that is delimited by the bottom plate 7, the cover 8 and the contour walls 10. Here, the transport apparatus is rotatable around a shaft 11 that essentially runs from the drive device 5, through the cover, to the bottom plate without being necessarily journaled on the bottom plate. In figure 3, this shaft is essentially perpendicular to the plane of the drawing. The drive device, which is arranged above the cover, interacts with said shaft to drive the rotor in a rotation direction that can be either clockwise or anticlockwise.

Continuing to look at figure 3, which shows the scraper 2 without its cover, it can be seen that the scraper's scoop has a slightly prominent front corner 12 in the device's working direction 3. While the scraper is in use, this front corner is positioned above the carriageway. Diametrically opposite this front corner, there is a rear corner 13 that, while the scraper is in use, is positioned above the carriageway's lateral verge. These corners are connected by the outer edge of the bottom plate 7, here named a working edge 14. While the scraper is in use, this working edge is essentially oriented in the device's working direction and, additionally, parallel with this. The working edge can be formed either as a broken line as shown in figure 3 or as a uniform arc. Vis-à-vis the working direction 3, the working edge is advantageously angled so that, at the front corner 12, there is an acute angle α between the working edge 14 and the contour wall 9. Thanks to this angling, the material loosened by the scraper is, at least to a certain extent, moved along the working edge towards the road verge.

The working edge 14 advantageously has one or more cutting blades 15 equipped with replaceable steel wear plates 16 oriented in the device's working direction 3 and towards the embankment - see also figures 1 and 2.

Thanks to the angled line of the working edge 14 and its cutting blade 15, the scraper 2 efficiently cuts roadside debris mounds to then move the material towards the road verge and lift it towards the transport apparatus 4. As mentioned above, the transport apparatus is formed as a rotor with blades 17. In their simplest design, while projecting radially from the shaft 11, these blades are essentially perpendicular to the bottom plate 7 and the cover 8 - see figure 3. The rotor's function can, of course, be influenced by selecting blades that project arcuate from the shaft. Blades can also have a straight or curved cross section in a perpendicular plane. Arranging wear parts on a blade's lower edge (which is oriented towards the bottom plate) can considerably extend its service life. To protect the rotor and strengthen it structurally, said blades can advantageously be joined to an upper support plate 18 and a lower support plate 19 that are essentially parallel with, respectively, the bottom plate and the cover. An advantageous design is achieved by the upper support plate having a diameter that is essentially greater than the diameter of the lower support plate - see also figure 2. Here, the lower support plate can advantageously be recessed into the blades. This design contributes to reducing the extent to which scraped-up material can penetrate between the bottom plate and the lower support plate.

With the rotation of the blades 17, the material that rises into the scoop after being loosened from the roadside debris mounds is rapidly flung out along the road's embankment, where it lies evenly distributed.

To facilitate scoop movement, the bottom plate 7 is advantageously equipped with replaceable support organs 20 such as skids and/or support wheels or support rollers.

The described device for clearing roadside debris mounds works as follows.

The selected work machine grips the device's quick-release mount 1. In a quick-release mount according to the present advantageous design, the device's horizontal position can, if necessary, be set by adjusting the relationship between two mounting plates 21 and 22 that, lying against each other, are arranged on the quick-release mount. See, for example, figure 3. The horizontal position can, for example, be adjusted using a setting screw 23 that moves the mounting plates rotationally in relation to each other. This movement is regulated by, for example, a number of locking screws 24 in simple, arc-shaped guides 25 in the form of cut-outs in the mounting plates. When the device is in the desired position as regards the horizontal plane, the locking screws are tightened.

To transport the device, it can, if necessary, be equipped with an articulation 26 that allows a rotation between the scraper 2 and the quick-release mount 1. Here, the rotation movement can be operated by an operating apparatus 27 shown in figures 1 and 3. Said articulation can, of course, also be replaced with a guide between the quick-release mount and the scraper, the operating apparatus displacing the scraper along the guide in a direction towards or away from the road verge.

When the work machine has reached the road maintenance site, the scraper 2 is manoeuvred to a position where the front edge, the working edge - 14, of the scoop's bottom plate 7 is slightly angled in relation to the work machine's working direction with the front corner 12 above the carriageway and the rear corner 13 above the road verge. The scoop is now resting against or close to a support arm 28 that, from the quick-release mount 1, runs towards the road verge. The support arm can be rigidly mounted to the quick-release mount or to one of the mounting plates 21 or 22 that are mounted on the quick-release mount. Alternatively, the support arm can be of a telescopic design whereby, in a position behind the scoop, it can be telescoped in or out either manually or using a special operating organ - not shown in the present figures. If necessary, the scoop can interact with the support arm to prevent the scoop swinging too much towards the work machine, something that could happen if, for example, the scraper hits an obstacle during the course of work.

Work is now started by positioning the steel wear plate 16 equipped cutting blade 15 of the scoop 2 against the carriageway and advancing in the carriageway's direction with, if necessary, the bottom plate 7 and its support organ 20 taking the weight of the scraper as work progresses.

As the work machine advances in the carriageway's direction, the cutting blade 15 lifts any material that has collected in mounds on the carriageway and road verge. Owing to the continuous forwards movement, the material is pushed not only up into the scoop's transport space 9 and onwards towards the rotor's blades 17, but also, owing to the backwards angled working edge 14, out towards the road verge. The blades, here rotating clockwise, exert their influence on the material lifted into the transport space and fling it out sidewards across the road embankment. Because the distance between bottom plate 7 and cover 8 is relatively small, the scraper can easily be run under any guard rails along the road verge.

Where the road verge has posts for traffic signs, road lighting or guard rails, the scraper can be angled aside from the working direction 3 to avoid such occasional obstacles. The scraper's cutting blade 15 is temporarily directed towards the carriageway while, at the same time, it smoothly carries out maintenance around the post. By temporarily rotating the blades 17 anticlockwise, the material that is loosened at the post can be collected in the scoop's transport space 9 so that, when the post has been passed, clockwise rotation can be resumed, this emptying the scoop by flinging out the material in the normal way.

The description above and the figures cited therein are solely intended to give an overview of the present solution for the design of a device for clearing roadside debris mounds. Thus, the solution is not limited exclusively to the above or to the designs in the attached patent claims. Indeed, a number of variations or alternative designs are possible within the concept described in the attached patent claims.

## Claims

1. Device for clearing roadside debris mounds at road embankments, said device including at least the following parts:
a quick-release mount (1) for hitching the device to a work machine, a scraper (2) pivotally arranged on the quick-release mount,
a transport apparatus (4) for evacuating loosened material, and
a drive device (5) for operating the transport apparatus,
**characterised by** that
the scraper (2) comprises a scoop that has a bottom plate (7) and a cover (8) arranged to be essentially parallel to each other, and
the scoop further comprising one or more contour walls (10) that, leaving the scoop open between the bottom plate and the cover in the working direction and in a direction towards the adjacent road embankment, run from the bottom plate to the cover partially sealing the scoop vertically,
the transport apparatus (4) is arranged between said bottom plate and cover such that
the transport apparatus is rotatable around a shaft (11) running from the drive device (5), through the cover (8), and essentially to the bottom plate (7),
the drive device (5) is arranged above the cover (8), where it is arranged to interact with said shaft (11), and
the scoop of the scraper (2) has a front corner (12), that is to be positioned above the carriageway, and a rear corner (13), that is to be positioned above the carriageway's lateral verge, said corners being connected by a working edge (14).

2. Device according to patent claim 1, **characterised by** the bottom plate (7) having support organs (20).

3. Device according to patent claim 1 or 2, **characterised by** the working edge (14) being formed as a broken line.

4. Device according to patent claim 1 or 2, **characterised by** the working edge (14) being formed as a uniform arc.

5. Device according to any of the foregoing patent claims, **characterised by** the working edge (14) having cutting blades (15).

6. Device according to any of the foregoing patent claims, **characterised by** the transport apparatus (4) including a rotor with blades (17).

7. Device according to patent claim 6, **characterised by** the blades (17) being essentially perpendicularly positioned between the bottom plate (7) and the cover (8).

8. Device according to patent claim 6 or 7, **characterised by** the rotor's blades (17) being joined to an upper support plate (18) and a lower support plate (19) that are essentially parallel with, respectively, the cover (8) and the bottom plate (7).

9. Device according to patent claim 8, **characterised by** the upper support plate (18) having a diameter that is essentially greater than the diameter of the lower support plate (19).

## Patentansprüche

1. Vorrichtung zum Beseitigen von straßenseitigen Schutthügeln an Straßenböschungen, wobei die Vorrichtung wenigstens die folgenden Teile umfasst:
eine Schnellspannhalterung (1) zum Ankuppeln der Vorrichtung an eine Arbeitsmaschine, einen Abstreifer (2), der schwenkbar in der Schnellspannhalterung angeordnet ist,
eine Transportvorrichtung (4) zum Abführen von gelöstem Material und
eine Antriebsvorrichtung (5) zum Betreiben der Transportvorrichtung,
**dadurch gekennzeichnet, dass**
der Abstreifer (2) eine Schaufel umfasst, die eine Bodenplatte (7) und eine Abdeckung (8) aufweist, die im Wesentlichen parallel zueinander angeordnet sind, und
die Schaufel weiterhin eine oder mehrere Umfangswände (10) umfasst, die die Schaufel zwischen der Bodenplatte und dem Deckel in Arbeitsrichtung und in Richtung auf die angrenzenden Straßenböschung geöffnet lassen und von der Bodenplatte zu der Abdeckung verlaufen, die die Schaufel vertikal abdeckt,
die Transportvorrichtung (4) derart zwischen der Bodenplatte und der Abdeckung angeordnet ist, dass
die Transportvorrichtung um eine Welle (11) drehbar ist, die von der Antriebsvorrichtung (5) durch die Abdeckung (8) und im Wesentlichen zu der Bodenplatte (7) verläuft,
wobei die Antriebsvorrichtung (5) oberhalb der Abdeckung (8) angeordnet ist und sie derart angeordnet ist, dass sie mit der Welle (11) zusammenwirkt, und
die Schaufel des Abstreifers (2) eine vordere Ecke (12), die über der Fahrbahn zu positionieren ist, und eine hintere Ecke (13) hat, die über dem seitlichen Rand der Fahrbahn zu positionieren ist, wobei die Ecken durch den äußeren Rand der Bodenplatte (7), hier Arbeitskante (14) genannt, verbunden sind.

2. Vorrichtung nach Patentanspruch 1, **dadurch gekennzeichnet, dass** die Bodenplatte (7) Stützpfeiler (20) aufweist.

3. Vorrichtung nach Patentanspruch 1 oder 2, **dadurch gekennzeichnet, dass** die Arbeitskante (14) als unterbrochene Linie ausgebildet ist.

4. Vorrichtung nach Patentanspruch 1 oder 2, **dadurch gekennzeichnet, dass** die Arbeitskante (14) als einheitlicher Bogen ausgebildet ist.

5. Vorrichtung nach einem der vorhergehenden Patentansprüche, **dadurch gekennzeichnet, dass** die Arbeitskante (14) Schneidklingen (15) aufweist.

6. Vorrichtung nach einem der vorhergehenden Patentansprüche, **dadurch gekennzeichnet, dass** die Transportvorrichtung (4) einen Rotor mit Klingen (17) umfasst.

7. Vorrichtung nach Patentanspruch 6, **dadurch gekennzeichnet, dass** die Klingen (17) im Wesentlichen senkrecht zwischen der Bodenplatte (7) und der Abdeckung (8) angeordnet sind.

8. Vorrichtung nach Patentanspruch 6 oder 7, **dadurch gekennzeichnet, dass** die Klingen (17) des Rotors mit einer oberen Stützplatte (18) und einer unteren Stützplatte (19) verbunden sind, die im Wesentlichen parallel zu der Abdeckung (8) bzw. der Bodenplatte (7) sind.

9. Vorrichtung nach Patentanspruch 8, **dadurch gekennzeichnet, dass** die obere Stützplatte (18) einen Durchmesser aufweist, der im Wesentlichen größer ist als der Durchmesser der unteren Stützplatte (19).

## Revendications

1. Dispositif pour enlever des monticules de débris de bas-côté de route sur des remblais routiers, ledit dispositif incluant au moins les parties suivantes :
une fixation à dégagement rapide (1) pour atteler le dispositif à une machine de travail, une décapeuse (2) installée en pivotement sur la fixation à dégagement rapide,
un dispositif de transport (4) pour évacuer un matériau meuble, et
un dispositif d'entraînement (5) pour faire fonctionner le dispositif de transport,
**caractérisé par** ce que
la décapeuse (2) comprend une pelle qui présente une plaque de fond (7) et un capot (8) disposés pour être essentiellement parallèles l'un à l'autre, et
la pelle comprenant en outre une ou plusieurs parois de contour (10) qui, laissant la pelle ouverte entre la plaque de fond et le capot dans la direction de fonctionnement et dans une direction vers le bas-côté de route adjacent, s'étendent de la plaque de fond au capot en scellant verticalement partiellement la pelle,
le dispositif de transport (4) est disposé entre les dits plaque de fond et capot de sorte que
le dispositif de transport soit mobile en rotation autour d'un arbre (11) s'étendant du dispositif d'entraînement (5), à travers le capot (8), et essentiellement vers la plaque de fond (7),
le dispositif d'entraînement (5) est disposé au-dessus du capot (8), où il est disposé pour interagir avec ledit arbre (11), et
la pelle de la décapeuse (2) présente un coin avant (12), qui est à positionner au-dessus de la chaussée, et un coin arrière (13), qui est à positionner au-dessus de l'accotement latéral de la chaussée, lesdits coins étant connectés par une arête extérieure de la plaque de fond (7), ici nommée arête de fonctionnement (14).

2. Le dispositif selon la revendication de brevet 1, **caractérisé par** la plaque de fond (7) présentant des organes de soutien (20).

3. Le dispositif selon la revendication de brevet 1 ou 2, **caractérisé par** l'arête de fonctionnement (14) étant constituée sous forme d'une ligne brisée.

4. Le dispositif selon la revendication de brevet 1 ou 2, **caractérisé par** l'arête de fonctionnement (14) étant constituée sous forme d'un arc uniforme.

5. Le dispositif selon l'une quelconque des revendications de brevet précédentes, **caractérisé par** l'arête de fonctionnement (14) présentant des lames coupantes (15).

6. Le dispositif selon l'une quelconque des revendications de brevet précédentes, **caractérisé par** le dispositif de transport (4) incluant un rotor doté de lames (17).

7. Le dispositif selon la revendication de brevet 6, **caractérisé par** les lames (17) étant essentiellement positionnées perpendiculairement entre la plaque de fond (7) et le capot (8).

8. Le dispositif selon la revendication de brevet 6 ou 7, **caractérisé par** les lames de rotor (17) étant jointes à une plaque de soutien supérieure (18) et une plaque de soutien inférieure (19) qui sont essentiellement parallèles, respectivement, au capot (8) et à la plaque de fond (7).

9. Le dispositif selon la revendication de brevet 8, **caractérisé par** la plaque de soutien supérieure (18) présentant un diamètre qui est essentiellement supérieur au diamètre de la plaque de support inférieure (19).
